# FASCICULE DE BREVET EUROPEEN

(11) **EP 2 554 493 B1**
(45) Date de publication et mention de la délivrance du brevet: **30.07.2014**
(21) Numéro de dépôt: 12178697.4
(22) Date de dépôt: 31.07.2012
(51) Int. Cl.: B65D 90/00, B65D 90/02, B65D 90/08, B65D 90/52, B60P 3/22

(54) **Citerne comportant une cloison encastrée**
Zysterne, die mit einer eingebauten Trennwand ausgestattet ist
Tank with recessed partition

(30) Priorité: 01.08.2011 FR 1157023
(43) Date de publication de la demande: 06.02.2013
(73) Titulaire: Etablissements MAGYAR, 21000 Dijon (FR)
(72) Inventeur: Magyar, Daniel, 21000 Dijon (FR); Magyar, Laurent, 75001 Paris (FR)
(74) Mandataire: Lebkiri, Alexandre

(56) Documents cités:
- WO-A1-2010/037561
- CH-A- 472 325
- JP-U- 57 193 686
- US-A- 3 383 002
- US-A- 5 865 923
- US-B1- 6 361 635

## Description

### DOMAINE TECHNIQUE

La présente invention se rapporte au domaine des citernes comportant des cloisons, et notamment au domaine des citernes semi-remorques ou remorques pour le transport de produits gazeux, liquides, pâteux ou pulvérulents.

### ETAT DE LA TECHNIQUE ANTERIEUR

Les citernes comportent parfois des cloisons qui permettent de séparer l'intérieur de la citerne en plusieurs compartiments ou de limiter les effets de coup de bélier du liquide transporté lorsque ces cloisons ont un rôle de brise flot. Ainsi, différents produits peuvent être stockés dans la citerne. Généralement, les cloisons sont soudées à l'intérieur de la citerne. Toutefois, la fixation de ces cloisons n'est pas très solide, surtout lorsque l'un des compartiments est sous pression.

Ce problème de la solidité de la fixation des cloisons à la paroi de la citerne se pose particulièrement dans le cas des citernes en matériau composite.

Le document CH 472 325 divulgue une citerne en matériau composite comportant des cloisons internes. Le document US 3,383,002 divulgue un réservoir muni d'une cloison encastrée dans la paroi latérale du réservoir.

### EXPOSE DE L'INVENTION

L'invention vise à remédier aux inconvénients de l'état de la technique en proposant une citerne pourvue d'une cloison permettant de séparer la citerne en plusieurs compartiments, cette cloison résistant à la pression éventuelle qui règne dans un des compartiments.

Un autre objet de l'invention est de proposer un mode de fixation d'une cloison en matériau composite ou plastique à un corps de citerne en matériau composite qui soit solide et résistant dans le temps.

Pour ce faire, est proposé selon un premier aspect de l'invention, une citerne comportant :
- un corps de citerne formé par une paroi latérale; la paroi latérale du corps de citerne présentant une structure sandwich comportant un revêtement intérieur et un revêtement extérieur, de part et d'autre d'un premier matériau intercalaire;
- au moins une cloison ;
   le revêtement intérieur comportant une première peau et une deuxième peau, la deuxième peau étant située entre la première peau et le premier matériau intercalaire, et la cloison comportant deux parois, les deux parois de la cloison étant encastrées dans la première peau uniquement.

En effet, le fait d'encastrer la cloison dans la paroi latérale du corps de citerne permet une meilleure résistance de la cloison aux mouvements des liquides contenus dans le corps de citerne, et dans le cas d'une cloison pleine, à la pression dans un des compartiments.

La citerne selon l'invention peut également présenter une ou plusieurs des caractéristiques ci-après prises individuellement ou selon toutes les combinaisons techniquement possibles.

Avantageusement, le corps de citerne s'étend suivant un axe de référence, la cloison s'étendant suivant une direction sensiblement perpendiculaire à l'axe de référence.

Le mode de fixation de la cloison à la paroi latérale de la citerne s'applique tout particulièrement dans le cas où la structure sandwich de la paroi latérale du corps de citerne est en matériau composite.

Avantageusement, la première peau est en plastique et la deuxième peau est en matériau composite.

Selon un mode de réalisation préférentiel, la cloison présente une structure sandwich, un deuxième matériau intercalaire se trouvant entre les deux parois de la cloison, le deuxième matériau intercalaire étant encastré dans la première peau.

Le deuxième matériau intercalaire est de préférence encastré dans la deuxième peau. Ainsi, la fixation de la cloison est plus solide, ce qui permet à la cloison de résister à des efforts plus importants .Avantageusement, le deuxième matériau intercalaire est un stratifié.

Avantageusement, les deux parois de la cloison sont en plastique.

Avantageusement, la cloison est en outre soudée à la paroi latérale du corps de citerne, ce qui permet de renforcer la fixation de la cloison. Le soudage effectué est de préférence un soudage plastique, puisque la première peau et les deux parois de la cloison sont de préférence en plastique.

Afin d'avoir la fixation la plus solide possible, la cloison est à la fois soudée à la paroi latérale du corps de citerne par une soudure intérieure et par une soudure extérieure.

On entend par soudure intérieure, une soudure effectuée entre la cloison et la seconde peau du revêtement intérieur (donc à l'intérieur du revêtement intérieur). On entend par soudure extérieure, une soudure effectuée entre la cloison et une face de la première peau dirigée vers le contenu du corps de citerne.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une vue en coupe schématique d'une citerne selon un mode de réalisation de l'invention ;
- La figure 2, une vue en coupe de la fixation d'une cloison dans une citerne selon un mode de réalisation de l'invention ;
- La figure 3, une vue en coupe de la fixation d'une cloison d'une citerne selon un autre mode de réalisation de l'invention.
- La figure 4, une vue en coupe de la fixation d'une cloison d'une citerne selon un autre mode de réalisation de l'invention.

Pour plus de clarté, les éléments identiques ou similaires sont repérés par des signes de références identiques sur l'ensemble des figures.

### DESCRIPTION DETAILLEE D'AU MOINS UN MODE DE REALISATION

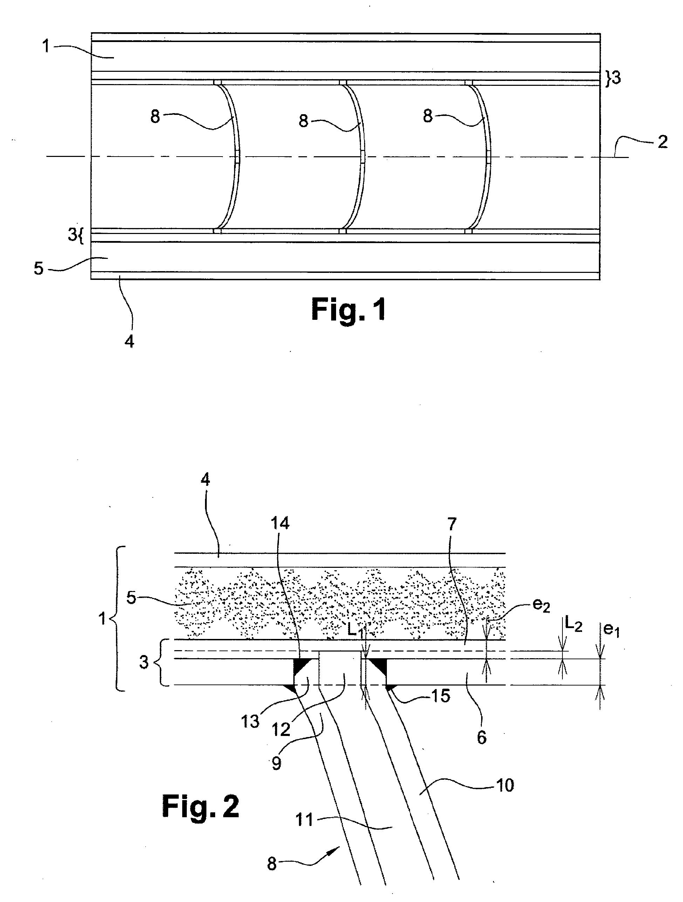

La figure 1 représente une citerne selon un mode de réalisation de l'invention. Cette citerne comporte une paroi latérale 1. La paroi latérale 1 présente une symétrie de révolution autour d'un axe de référence 2.

La paroi latérale 1 comporte un revêtement intérieur 3 et un revêtement extérieur 4 entre lesquels se trouve un premier matériau intercalaire 5, par exemple un matériau expansé tel qu'illustré dans le mode de réalisation illustré à la figure 1.

Le revêtement intérieur comporte une première peau 6 et une deuxième peau 7, la deuxième peau 7 étant située entre la première peau 6 et le premier matériau intercalaire 5.

La première peau peut par exemple être réalisée en plastique, comme par exemple en PVC ou en polypropylène. La deuxième peau 7 peut par exemple être réalisée dans un matériau composite stratifié.

Le matériau intercalaire 5 peut par exemple être du bois, par exemple du balsa, un matériau expansé, par exemple de la mousse polyuréthane, un matériau plein, un matériau présentant une structure nid d'abeilles ou autre matériau couramment utilisé dans les structures sandwichs.

Le revêtement extérieur 4 peut par exemple être constitué d'un matériau composite.

La citerne comporte également des cloisons 8. Ces cloisons 8 s'étendant suivant une direction sensiblement perpendiculaire à l'axe de référence.

Dans l'exemple de réalisation représenté sur la figure 1, chaque cloison 8 est pleine de sorte que les cloisons séparent le corps de citerne en quatre compartiments. Toutefois, on pourrait également envisager d'avoir certaines, voir toutes les cloisons, qui sont creuses, de sorte que les cloisons jouent le rôle de brise flot.

La fixation d'une des cloisons à la paroi latérale du corps de citerne est représentée plus précisément sur les figures 2, 3 et 4.

Dans chacun des modes de réalisation, chaque cloison 8 comporte deux parois 9, 10. Ces deux parois 9, 10 sont encastrées dans la première peau 6. Ceci permet d'augmenter la rigidité de la fixation de la cloison 8 au corps de citerne. On notera que de façon avantageuse, les deux parois 9, 10 ne sont pas encastrées dans la deuxième peau 7, ceci permettant de ne pas fragiliser la paroi latérale 1 de la citerne. La cloison 8 peut être formée par les deux parois 9, 10 accolées ou par un matériau sandwich formé par une paroi 9, un deuxième matériau intercalaire 11 et une paroi 10. Le deuxième matériau intercalaire 11 peut être un matériau composite, un matériau stratifié ou encore un matériau expansé.

Dans les trois modes de réalisation illustrés aux figures 2, 3 et 4, chaque cloison comporte deux parois 9, 10 entre lesquelles se trouve un deuxième matériau intercalaire 11 par exemple en composite stratifié. Ces trois modes de réalisation ne sont pas limitatifs et sont donnés à titre d'exemple.

Les deux parois 9, 10 peuvent par exemple être en plastique, par exemple en PVC ou en polypropylène.

La citerne selon l'invention est particulièrement remarquable en ce que la cloison 8 est encastrée dans la paroi latérale 1 du corps de citerne, ce qui permet d'augmenter la solidité de la fixation de la cloison au corps de citerne.

Plus précisément, dans l'exemple de réalisation de la figure 2, les deux parois 9, 10 de la cloison 8 sont encastrées dans la première peau 6 de la paroi latérale 1 du corps de citerne, mais pas dans la deuxième peau 7 de ladite paroi latérale 1. En outre, ces deux parois 9, 10 sont entièrement encastrées dans la première peau 6 de la paroi latérale 1 du corps de citerne, c'est-à-dire que ces deux parois 9, 10 sont encastrées sur une longueur L1 égale à l'épaisseur e1 de la première peau 6.

Par ailleurs, dans ce mode de réalisation, le matériau intercalaire 11 de la cloison 8 est encastré à la fois dans la première peau 6, mais également dans la deuxième peau 7. Par contre, le matériau intercalaire 11 n'est pas entièrement encastré dans la deuxième peau 7, mais seulement sur une longueur L2 inférieure à l'épaisseur e2 de la deuxième peau 7, de façon à ne pas fragiliser la paroi latérale 1 de la citerne.

Dans ce mode de réalisation, le pourtour 12 du matériau intercalaire 11 de la cloison 8 qui est encastré dans la paroi latérale 1 du corps de citerne présente donc des dimensions radiales supérieures à celles du pourtour 13 des deux parois 9, 10 qui est encastré dans la paroi latérale 1 du corps de citerne.

Ce mode de réalisation permet une fixation très solide de la cloison 8 à la paroi latérale 1 du corps de citerne, ce qui est particulièrement avantageux dans le cas où la cloison est pleine et où un des compartiments est sous pression.

Ce mode de réalisation est également avantageux lorsque la cloison est une cloison brise flot et que les compartiments sont remplis partiellement, de manière à résister aux efforts de surpression qui sont dus aux déplacements du liquide.

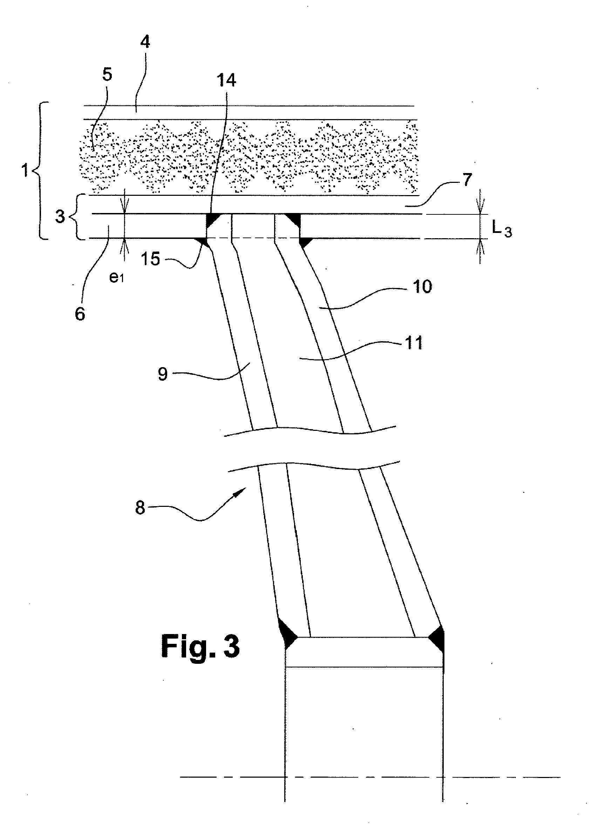

La figure 3 représente un deuxième mode de réalisation de l'invention dans lequel les deux parois 9, 10 et le matériau intercalaire 11 sont encastrés sur une même longueur L3 dans la paroi latérale 1 du corps de citerne.

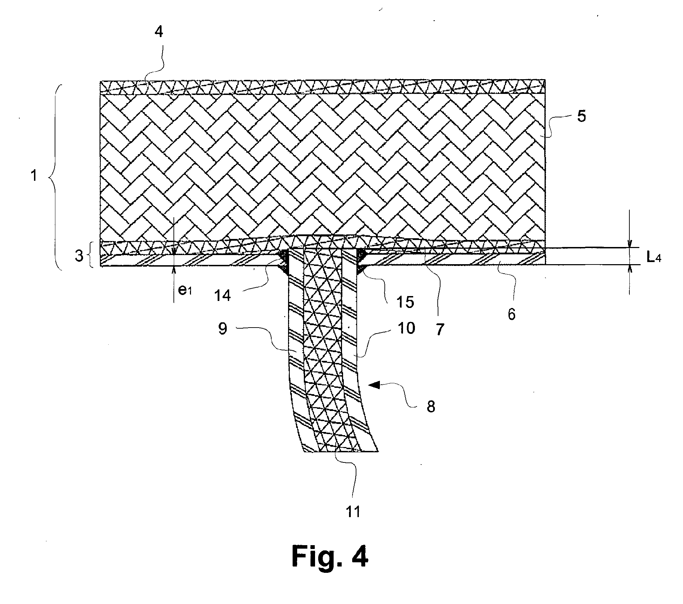

La figure 4 représente un troisième mode de réalisation de l'invention dans lequel les deux parois 9, 10 et le matériau composite stratifié 11 sont encastrés sur une même longueur L4 qui est supérieure à l'épaisseur e1 de la première peau 6, sans toutefois être encastrés dans la deuxième peau 7 du revêtement intérieur 3. Ainsi, l'intégrité de la paroi latérale est assurée. En effet, au niveau de l'encastrement de la cloison 8, la seconde peau est décalée vers l'intérieur du matériau intercalaire 5, ce qui permet de garder une seconde peau 7 d'épaisseur constante.

Ce mode de réalisation permet d'augmenter davantage la solidité de la fixation de la cloison au corps de citerne et par conséquent de mieux résister aux sollicitations.

Ainsi, en fonction des efforts auxquels doit résister la fixation de la cloison, on peut jouer sur l'épaisseur de chacune des couches de la cloison que l'on encastre dans la paroi latérale 1.

Par ailleurs, afin d'augmenter la résistance de la fixation de la cloison 8 à la paroi latérale 1, on peut souder la cloison 8 à la paroi latérale 1. Les soudures permettant de souder la cloison 8 à la paroi latérale 1 sont de préférence à la fois des soudures intérieures 14 et des soudures extérieures 15 comme représenté sur les figures 2 et 3. Ces soudures sont de préférence réalisées entre chacune des parois 9, 10 de la cloison 8 et la première peau 6 de la paroi latérale 1 du corps de citerne.

Naturellement, l'invention n'est pas limitée aux modes de réalisation décrits en référence aux figures, et des variantes pourraient être envisagées sans sortir du cadre de l'invention. Notamment, les matériaux utilisés pour les cloisons et la paroi latérale ne sont donnés qu'à titre d'exemple.

## Revendications

1. Citerne comportant :
- un corps de citerne formé par une paroi latérale (1), la paroi latérale (1) du corps de citerne présentant une structure sandwich comportant un revêtement intérieur (3) et un revêtement extérieur (4), de part et d'autre d'un premier matériau intercalaire (5);
- au moins une cloison (8) ;
le revêtement intérieur (3) comportant une première peau (6) et une deuxième peau (7), la deuxième peau (7) étant située entre la première peau (6) et le premier matériau intercalaire (5), et la cloison (8) comportant deux parois (9, 10), **caractérisée en ce que** les deux parois (9, 10) de la cloison (8) sont encastrées dans la première peau (6) uniquement.

2. Citerne selon la revendication précédente, dans laquelle la structure sandwich de la paroi latérale (1) du corps de citerne est en matériau composite.

3. Citerne selon l'une des revendications précédentes, **caractérisé en ce que** le premier matériau intercalaire (5) est un matériau expansé ou du bois, ou une structure nid d'abeilles.

4. Citerne selon l'une des revendications précédentes, dans laquelle la première peau (6) est en plastique et la deuxième peau (7) est en matériau composite.

5. Citerne selon l'une des revendications précédentes, dans laquelle la cloison (8) présente une structure sandwich, un deuxième matériau intercalaire (11) se trouvant entre les deux parois (9,10) de la cloison (8), le deuxième matériau intercalaire (11) étant encastré dans la première peau (6).

6. Citerne selon la revendication 5, dans laquelle le deuxième matériau intercalaire (11) est encastré dans la deuxième peau (7).

7. Citerne selon l'une des revendications 5 à 6 dans laquelle le deuxième matériau intercalaire (11) est un stratifié.

8. Citerne selon l'une des revendications précédentes, dans laquelle les deux parois (9, 10) de la cloison (8) sont en plastique.

9. Citerne selon l'une des revendications précédentes, dans laquelle la cloison (8) est soudée à la paroi latérale (1) du corps de citerne.

10. Citerne selon l'une des revendications précédentes, dans laquelle la cloison (8) est à la fois soudée à la paroi latérale (1) du corps de citerne par une soudure intérieure (14) et par une soudure extérieure (15).

## Patentansprüche

1. Tank, umfassend:
- einen Tankkorpus, der durch eine Seitenwand (1) gebildet wird, wobei die Seitenwand (1) des Tankkorpus eine Sandwich-Struktur aufweist, umfassend eine interne Beschichtung (3) und eine externe Beschichtung (4) auf jeder Seite eines ersten Zwischenmaterials (5);
- wenigstens eine Abtrennung (8),
wobei die interne Beschichtung (3) eine erste Haut (6) und eine zweite Haut (7) umfasst, wobei die zweite Haut (7) sich zwischen der ersten Haut (6) und dem ersten Zwischenmaterial (5) befindet und die Abtrennung (8) zwei Wände (9, 10) umfasst, **dadurch gekennzeichnet, dass** die zwei Wände (9, 10) der Abtrennung (8) nur in der ersten Haut (6) versenkt sind.

2. Tank gemäß dem voranstehenden Anspruch, bei dem die Sandwich-Struktur der Seitenwand (1) des Tankkorpus aus Verbundmaterial ist.

3. Tank gemäß einem der voranstehenden Ansprüche, **dadurch gekennzeichnet, dass** das erste Zwischenmaterial (5) ein expandiertes Material oder Holz oder eine Wabenstruktur ist.

4. Tank gemäß einem der voranstehenden Ansprüche, bei dem die erste Haut (6) aus Plastik ist und die zweite Haut (7) aus einem Verbundmaterial ist.

5. Tank gemäß einem der voranstehenden Ansprüche, bei dem die Abtrennung (8) eine Sandwich-Struktur aufweist, wobei sich ein zweites Zwischenmaterial (11) zwischen den zwei Wänden (9, 10) der Abtrennung (8) befindet, wobei das zweite Zwischenmaterial (11) in der ersten Haut (6) versenkt ist.

6. Tank gemäß Anspruch 5, bei dem das zweite Zwischenmaterial (11) in der zweiten Haut (7) versenkt ist.

7. Tank gemäß Anspruch 5 bis 6, bei dem das zweite Zwischenmaterial (11) ein Schichtpressstoff ist.

8. Tank gemäß einem der voranstehenden Ansprüche, bei dem die zwei Wände (9, 10) der Abtrennung (8) aus Plastik sind.

9. Tank gemäß einem der voranstehenden Ansprüche, bei dem die Abtrennung (8) an die Seitenwand (1) des Tankkorpus geschweißt ist.

10. Tank gemäß einem der voranstehenden Ansprüche, bei dem die Abtrennung (8) an die Seitenwand (1) des Tankkorpus sowohl durch eine interne Schweißnaht (14) als auch durch eine externe Schweißnaht (15) verschweißt ist.

## Claims

1. Tank comprising:
- a tank body composed of a side wall (1), the side wall (1) of the tank body having a sandwich structure comprising an inner coating (3) and an outer coating (4), on each side of a first intermediate material (5);
- at least one partition (8),
the inner coating (3) comprising a first skin (6) and a second skin (7), the second skin (7) being located between the first skin (6) and the first intermediate material (5), and the partition (8) comprising two walls (9, 10), **characterised in that** the two walls (9, 10) of the partition (8) are embedded in the first skin (6) only.

2. Tank according to the previous claim, in which the sandwich structure of the side wall (1) of the tank body is made of a composite material.

3. Tank according to one of the previous claims, **characterised in that** the first intermediate material (5) is an expanded material or wood, or has a honeycomb structure.

4. Tank according to one of the previous claims, in which the first skin (6) is made of plastic and the second skin (7) is made of a composite material.

5. Tank according to one of the previous claims, in which the partition (8) has a sandwich structure, a second intermediate material (11) being placed between the two side walls (9, 10) of the partition (8), the second intermediate material (11) being embedded in the first skin (6).

6. Tank according to claim 5, in which the second intermediate material (11) is embedded in the second skin (7).

7. Tank according to claim 5 or 6, in which the second intermediate material (11) is a laminate.

8. Tank according to one of the previous claims, in which the two walls (9, 10) of the partition (8) are made of plastic.

9. Tank according to one of the previous claims, in which the partition (8) is welded to the side wall (1) of the tank body.

10. Tank according to one of the previous claims, in which the partition (8) is welded to the side wall (1) of the tank body by an internal weld (14) and by an external weld (15).
